# EUROPEAN PATENT APPLICATION

(11) **EP 1 854 531 A1**
(43) Date of publication of application: **14.11.2007**
(21) Application number: 06711903.2
(22) Date of filing: 18.01.2006
(51) Int. Cl.: B01F 7/00, B01F 7/08, B29B 7/18

(54) **KNEADING MACHINE AND KNEADING CONTROL METHOD**

(30) Priority: 02.03.2005 JP 2005056998; 29.11.2005 JP 2005343743
(71) Applicant: Kabushiki Kaisha Kobe Seiko Sho (Kobe Steel, Ltd.), Kobe-shi, Hyogo 651-8585 (JP)
(72) Inventor: UEMURA, Tatsuya c/o Takasago Works in KABUSHIKI, Araicho, Takasago-shi Hyogo, 6768670 (JP)
(74) Representative: TBK-Patent
(86) International application number: PCT/JP2006/300634
(87) International publication number: WO 2006/092911

(57) **Abstract**

An object of the invention is to provide a mixer and a mixing control method that enable to keep the driving efficiency of a motor high, and to flexibly follow a predetermined rotation speed of a mixing rotor pair, which is varied depending on various applications of the mixing rotor pair. A fixed speed motor is rotated at a constant rotation speed, and a variable speed motor is variably rotated at an arbitrary rotation speed. A difference in rotation speed between the fixed speed motor and the variable speed motor is supplied to the mixing rotor pair as the rotation speed by operations of a sun gear, a planetary gear, an internal gear, and a gear retainer of a planetary gear transmission.

## Description

### TECHNICAL FIELD

The present invention relates to a mixer for mixing a material to be mixed by rotating a pair of mixing rotors formed with mixing flights, and to a mixing control method.

### BACKGROUND ART

Conventionally, there is known a mixer i.e. an apparatus for mixing a raw material such as a rubber by rotating a pair of mixing rotors formed with mixing flights in different directions from each other in a mixing chamber. The mixer is constructed in such a manner that a torque of a fixed speed motor is outputted by a speed reduction system which reduces a rotation speed of the fixed speed motor, and the outputted torque is distributed to a pair of output shafts by a pair of connecting gears to transmit the torque from the output shaft pair to the mixing rotor pair.

Japanese Unexamined Patent Publication No. 11-57445 (hereinafter, called as "D1") discloses a mixing control method for a closed-type mixer, in which control parameters directly relating to physical properties of a material to be mixed are independently controlled so that the temperature of the material to be mixed follows a target temperature. According to the mixing control method for the closed-type mixer, optimal cooling, pressurization, or mixing can be performed depending on the physical properties of the material to be mixed.

Also, Japanese Unexamined Patent Publication No. 58-98215 (hereinafter, called as "D2") discloses a mixer for detecting a torque of a motor or a curve of a temperature rise during mixing to automatically control the rotation speed of a rotor. The mixer is advantageous in efficiently mixing a material to be mixed.

Further, Japanese Patent No. 3474712 (hereinafter, called as "D3") discloses a closed-type mixer, which realizes reduction of an installation space for the entirety of the mixer, and overall cost reduction relating to the mixer. The closed-type mixer enables to reduce the installation space, as compared with a conventional arrangement, and is advantageous in making the mixer compact as a whole.

In any of the arrangements recited in D1 through D3, a mixing rotor pair is rotated by a single drive motor in mixing a material to be mixed by the mixer. Accordingly, if the rotation speed of the mixing rotor pair is varied greatly, the driving efficiency of the drive motor may be lowered. Specifically, since the rotation speed of the mixing rotor pair is greatly varied depending on its application during a series of steps of processing the material to be mixed, an unduly large load may be imposed on the drive motor.

### DISCLOSURE OF THE INVENTION

It is an object of the present invention to provide a mixer and a mixing control method that enable to keep the driving efficiency of a motor high, and to flexibly follow a predetermined rotation speed of a mixing rotor pair, which is varied depending on various applications of the mixing rotor pair.

A first aspect of the invention is directed to a mixer for mixing a material to be mixed in a mixing chamber. The mixer is provided with a pair of mixing rotors each being rotatably supported on opposite ends of the mixing rotor. The mixing rotors are rotatable in different directions from each other. The mixer comprises: a fixed speed motor which is rotated at a constant rotation speed; a variable speed motor which is variably rotated at an arbitrary rotation speed; and a planetary gear transmission for transmitting a power of the fixed speed motor and a power of the variable speed motor to the mixing rotor pair. The planetary gear transmission includes a sun gear for receiving the power of the fixed speed motor; an internal gear for receiving the power of the variable speed motor; a planetary gear which is meshed with the sun gear and the internal gear; a gear retainer for transmitting the power from the planetary gear to the mixing rotor pair; a pair of connecting gears for splitting the power from the gear retainer into two, the connecting gears being rotated in different directions from each other in engagement with each other; and a pair of power output shafts which are provided in association with the connecting gears, respectively, and are connected to the mixing rotor pair for outputting the power split by the connecting gears to the mixing rotor pair.

In the mixer recited in the first aspect, the fixed speed motor is rotated at the constant rotation speed, and the variable speed motor is variably rotated at the arbitrary rotation speed. The rotation speed based on the rotation speed difference between the fixed speed motor and the variable speed motor is supplied to the mixing rotor pair by the operations of the sun gear, the planetary gear, the internal gear, and the gear retainer of the planetary gear transmission.

In the above arrangement, the rotational speed of the mixing rotor pair can be flexibly varied by driving the variable speed motor in addition to the fixed speed motor depending on a step of processing the material to be mixed. This arrangement facilitates mixing of the material to be mixed.

Specifically, in the case where the rotation speed of the mixing rotor pair is intended to be changed depending on a processing step by using the fixed speed motor and the variable speed motor, the rotation speed of the mixing rotor pair can be desirably changed by simply changing the rotation speed of the variable speed motor. This enables to reduce a load to the fixed speed motor and to the variable speed motor, and to rotate the mixing rotor pair at an optimal rotation speed depending on the driving states of the respective motors. This arrangement enables to maintain the driving efficiency of the respective motors high, and to secure long-term use of the respective motors.

A second aspect of the invention is directed to a method for controllably mixing a material to be mixed in a mixing chamber by rotating a pair of mixing rotors by combined use of a fixed speed motor which is rotated at a constant rotation speed, and a variable speed motor which is variably rotated at an arbitrary rotation speed. Each of the mixing rotors is rotatably supported on opposite ends thereof, and the mixing rotors are rotatable in different directions from each other. The method comprises controlling the rotation speed of the mixing rotor pair by combined control of turning on/off of the driving of the fixed speed motor, and changing of the rotation speed of the variable speed motor.

In the mixing control method recited in the second aspect, turning on/off of the driving of the fixed speed motor can be desirably switched over, and the rotation speed of the variable speed motor can be desirably changed depending on the physical properties of the material to be mixed and/or a variation of the physical properties.

In the above arrangement, a mixing step can be determined in advance depending on the physical properties of the material to be mixed so that the material to be mixed can be properly mixed depending on a variation of the physical properties of the material to be mixed.

Also, the rotational speed of the mixing rotor pair can be flexibly controlled by controlling the variable speed motor in addition to the fixed speed motor depending on a processing step of the material to be mixed. Specifically, in the case where the rotation speed of the mixing rotor pair is intended to be changed depending on the processing step by using the fixed speed motor and the variable speed motor, the rotation speed of the mixing rotor pair can be changed by simply controlling the rotation speed of the variable speed motor. This enables to reduce a load to the fixed speed motor and to the variable speed motor, and to rotate the mixing rotor pair at an optimal rotation speed depending on the driving states of the respective motors, which prevents the driving efficiency of the respective motors from unduly lowering. As a result, long-term use of the fixed speed motor and the variable speed motor is secured.

### BRIEF DESCRIPTION OF THE DRAWINGS

FIG. 1 is a schematic diagram showing an example of a closed-type mixer in accordance with a first embodiment of the invention.
FIG. 2 is a cross-sectional view taken along the line A-A in FIG. 1, specifically showing an example of an arrangement of a variable speed power transmission mechanism and a differential planetary gear mechanism shown in FIG. 1.
FIG. 3 is an illustration showing a relation between output in the closed-type mixer, and the rotation speed of a mixing rotor pair in mixing.
FIG. 4 is a schematic diagram showing an example of a closed-type mixer in accordance with a second embodiment of the invention.
FIG. 5 is a schematic diagram showing an example of a closed-type mixer in accordance with a third embodiment of the invention.
FIG. 6 is a schematic diagram showing an example of a closed-type mixer in accordance with a fourth embodiment of the invention.
FIG. 7 is a schematic diagram showing an example of a closed-type mixer in accordance with a fifth embodiment of the invention.

### BEST MODE FOR CARRYING OUT THE INVENTION

The following is a description on a case where the invention is applied to a closed-type mixer as an embodiment of the invention. It should be appreciated that the technical scope of the invention is not limited to the closed-type mixer, but may be applicable to any mixer, for instance, to a continuous mixer.

### (First Embodiment)

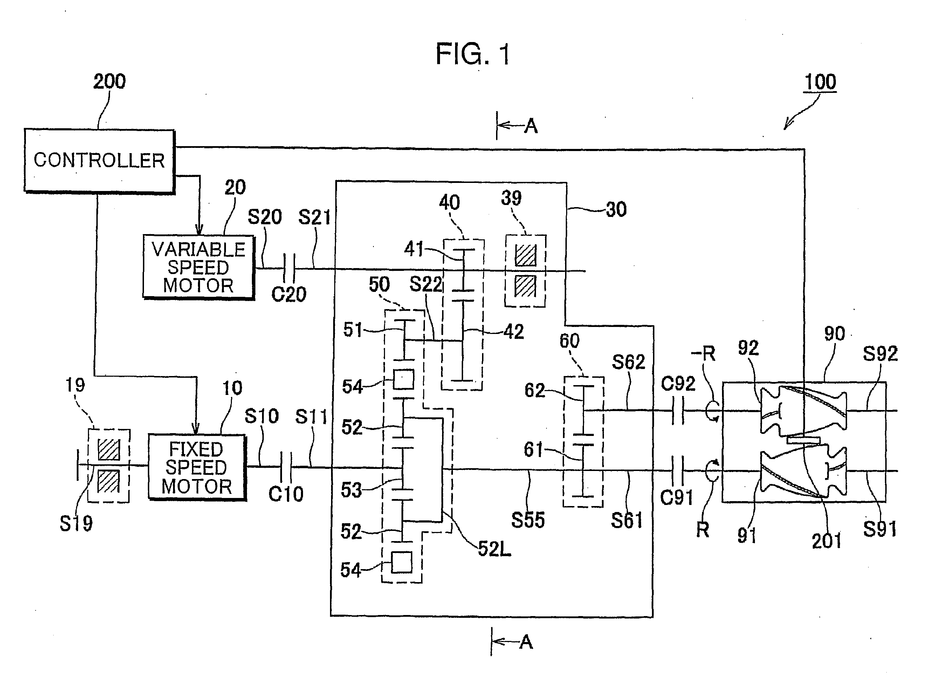

FIG. 1 is a schematic diagram showing an example of a closed-type mixer 100 in accordance with a first embodiment.

The closed-type mixer 100 shown in FIG. 1 essentially includes a fixed speed motor 10, a variable speed motor 20, a differential planetary system (a planetary gear transmission) 30, a mixing machine 90, and a controller 200.

The differential planetary system 30 is a one-piece unit including a variable speed brake 39, a variable speed power transmission mechanism 40, a differential planetary gear mechanism 50, and a distribution mechanism 60. The mixing machine 90 includes a pair of mixing rotors 91, 92, and a detector 201. The mixing rotor pair 91, 92 each has a feed flight and a return flight for mixing.

In the following, a detailed construction of the closed-type mixer 100 is descried as well as its operation.

The fixed speed motor 10 has an output shaft S10 for transmitting rotation of the fixed speed motor 10, and a fixed speed brake shaft S19 for suspending the rotation of the fixed speed motor 10. The output shaft S10 of the fixed speed motor 10 is interconnected to a fixed speed driven shaft S11 via a connecting coupler C10. The fixed speed driven shaft S11 has a sun gear 53, which will be described later. The fixed speed driven shaft S11 is rotatable with the sun gear 53. A fixed speed brake 19 is mounted on the fixed speed brake shaft S19. The connecting coupler C10 may be omitted if the output shaft S10 is integrally formed with the fixed speed driven shaft S11.

While the closed-type mixer 100 is operated, the controller 200 issues a command to the fixed speed motor 10 and to the variable speed motor 20 to turn on/off of the driving of the fixed speed motor 10 and the variable speed motor 20. Upon receiving the command from the controller 200, the fixed speed motor 10 is driven to rotate the sun gear 53. The rotation of the fixed speed brake shaft S19 is suspended by a braking operation of the fixed speed brake 19, and the rotation of the fixed speed motor 10 is suspended when the rotation of the fixed speed brake shaft S19 is suspended.

The variable speed motor 20 has an output shaft S20 for transmitting rotation of the variable speed motor 20. The output shaft S20 of the variable speed motor 20 is interconnected to a variable speed driven shaft S21 via a connecting coupler C20. A power transmission gear 41 and the variable speed brake 39 are mounted on the variable speed driven shaft S21. The connecting coupler C20 may be omitted if the output shaft S20 and the variable speed driven shaft S21 are integrally formed.

Similarly to the fixed speed motor 10, the variable speed motor 20 is driven upon receiving a command from the controller 200 to rotate the power transmission gear 41. The rotation of the variable speed driven shaft S21 is suspended by a braking operation of the variable speed brake 39, and the rotation of the variable speed motor 20 is suspended when the rotation of the variable speed driven shaft S21 is suspended.

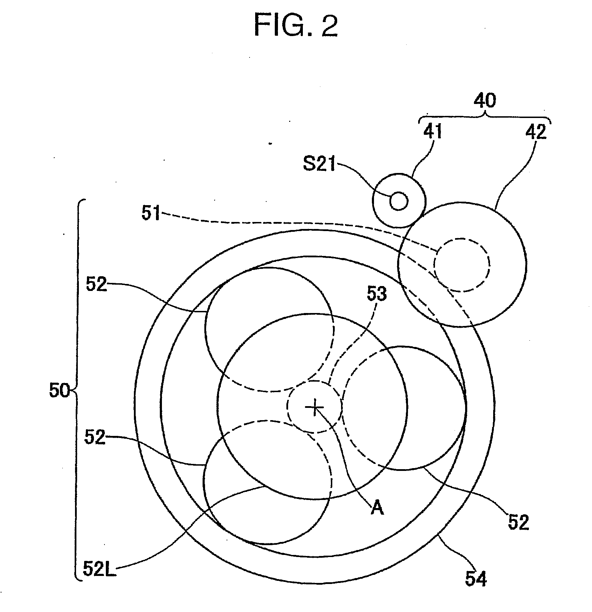

The variable speed power transmission mechanism 40 of the differential planetary system 30 includes the power transmission gear 41 and a power transmission gear 42. The power transmission gear 41 mounted on the variable speed driven shaft S21 is meshed with the power transmission gear 42 (see FIG. 2). The differential planetary gear mechanism 50 includes an internal gear 54, a plurality of planetary gears 52, a planetary gear driver (a gear retainer) 52L, the sun gear 53, and a power transmission gear 51 which is meshed with outer teeth formed along an outer circumference of the internal gear 54.

The power transmission gear 42 of the variable speed power transmission mechanism 40, and the power transmission gear 51 of the differential planetary gear mechanism 50 are mounted on a power transmission shaft S22 in such a manner that the gears 42, 51 are integrally rotated. The sun gear 53 is formed along an inner circumference of the internal gear 54 of the differential planetary gear mechanism 50. The plural planetary gears 52 are formed in such a manner that each of the planetary gears 52 is meshed with the sun gear 53 and inner teeth of the internal gear 54. In this embodiment, three planetary gears 52 are used. The number of the planetary gears 52 to be used is not limited to three, but may be any number.

The planetary gears 52 are interconnected to each other by the planetary gear driver 52L. When each of the planetary gears 52 is rotated, the planetary gear driver 52L is rotated concentrically with a center of rotation of the sun gear 53.

Also, the sun gear 53 is rotated by driving of the fixed speed motor 10, and the internal gear 54 is rotated by driving of the variable speed motor 20 by way of the power transmission gear 41, the power transmission gear 42, and the power transmission gear 51. The sun gear 53 and the internal gear 54 are rotated at different numbers of rotations from each other.

Each of the planetary gears 52 moves around the sun gear 53, while rotating around its own axis depending on the rotation speed difference between the sun gear 53 and the internal gear 54. The planetary gear driver 52L is rotated depending on the movement of the planetary gears 52 around the sun gear 53. In this arrangement, the rotation speed of each of the planetary gears 52 can be changed by changing the rotation speed of the variable speed motor 20, irrespective of a state where the fixed speed motor 10 is rotated at a constant speed, or of a state where the rotation of the fixed speed motor 10 is suspended. Thus, the rotation speed of the planetary gear driver 52L can be flexibly changed.

The planetary gear driver 52L is connected to a drive shaft S55 for transmitting the driving force of the differential planetary gear mechanism 50 to the mixing machine 90. A connecting gear 61 of the distribution mechanism 60 is mounted on the drive shaft S55 in such a manner that the connecting gear 61 of the distribution mechanism 60 is meshed with a connecting gear 62. The connecting gear 62 is connected to a distribution drive shaft S62, to which a backward rotating shaft S92 is interconnected via a connecting coupler C92. The connecting gear 61 is connected to a distribution drive shaft S61, to which a forward rotating shaft S91 is interconnected via a connecting coupler C91.

In the above arrangement, when the planetary gear driver 52L is rotated, the connecting gear 61 of the distribution mechanism 60 is rotated in the direction shown by the arrow R via the drive shaft S55, and the connecting gear 62 is rotated in the direction shown by the arrow -R, which is opposite to the R direction. Since the distribution drive shaft S61 and the distribution drive shaft S62 are rotated in the different directions from each other by the operation of the distribution mechanism 60, the forward rotating shaft S91 and the backward rotating shaft S92 are rotated in different directions from each other. The drive shaft S55 and the distribution drive shaft S61, or the drive shaft S55 and the distribution drive shaft S62 may be an integral shaft.

The mixing machine 90 includes the mixing rotor 91 having the forward rotating shaft S91, and the mixing rotor 92 having the backward rotating shaft S92. These mixing rotors 91, 92 are arranged in such a manner that the rotating shafts S91, S92 with opposite ends of each of the rotating shafts S91, S92 being rotatably supported about its axis of rotation are parallel to each other.

The mixing rotor 91 has the feed flight which is twisted in such a direction as to feed a material to be mixed from one end of the forward rotating shaft S91 toward the other end thereof, and the return flight which is twisted in such a direction as to feed the material to be mixed from the other end of the forward rotating shaft S91 toward the one end thereof. The mixing rotor 92 has the feed flight which is twisted in such a direction as to feed the material to be mixed from one end of the backward rotating shaft S92 toward the other end thereof, and the return flight which is twisted in such a direction as to feed the material to be mixed from the other end of the backward rotating shaft S92 toward the one end thereof. This arrangement allows a strong shearing work to be done on the material to be mixed with less energy consumption in the mixing machine 90, and enables to uniformly mix, melt, and disperse various kinds of polymers, fillers, additives, and the like.

In the above description, the controller 200 is operative to drive both the fixed speed motor 10 and the variable speed motor 20. Alternatively, the controller 200 may be operative to desirably vary the rotation speed of the variable speed motor 20 while keeping driving of the fixed speed motor 10, or to desirably vary the rotation speed of the variable speed motor 20 while suspending driving of the fixed speed motor 10.

FIG. 2 is a cross-sectional view taken along the line A-A in FIG. 1, specifically showing an example of an arrangement of the variable speed power transmission mechanism 40 and the differential planetary gear mechanism 50 shown in FIG. 1.

As shown in FIG. 2, the fixed speed driven shaft S11 (not shown) where the sun gear 53 is mounted extends horizontally, and the power transmission gear 51, the power transmission gear 42, the power transmission gear 41, and the variable speed driven shaft S21 are arranged vertically away from the fixed speed driven shaft S11. The positional arrangement of the respective components shown in FIG. 2 is merely an example. The positional arrangement is not specifically limited to the one illustrated in FIG. 2.

Referring to FIG. 2, the three planetary gears 52 are arranged around the sun gear 53 equidistantly along the inner teeth of the internal gear 54. Also, arranging the variable speed power transmission mechanism 40 obliquely at an upward position or obliquely at a downward position with respect to the sun gear 53, in place of arranging the sun gear 53, the power transmission gear 42, and the power transmission gear 41 in tandem in the height direction of the differential planetary system 30 of the closed-type mixer 100 enables to reduce the installation space for the closed-type mixer 100.

Arranging the variable speed power transmission mechanism 40 so that the variable speed power transmission system 40 may not be disposed radially outside of the outermost circumference of the internal gear 54 enables to minimize the installation area (foot pattern) of the differential planetary system 30 of the closed-type mixer 100.

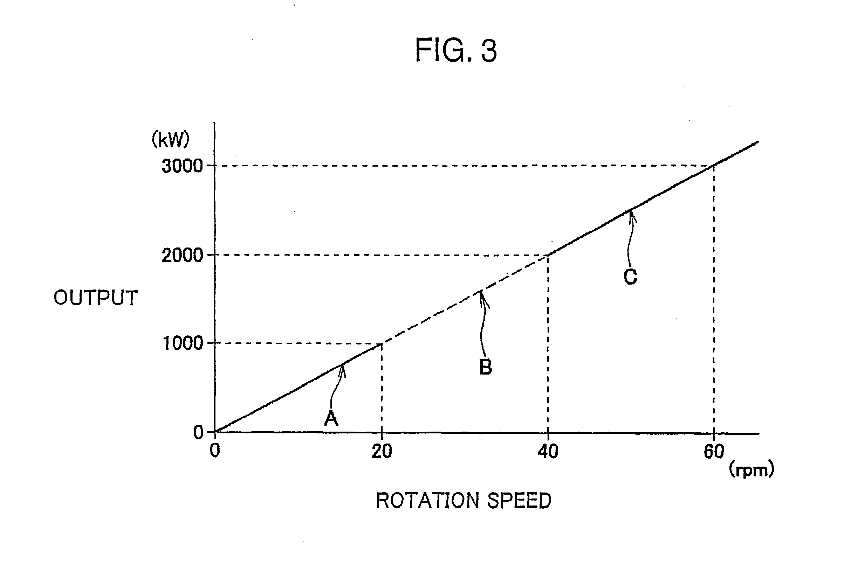

FIG. 3 shows an example of a relation between the output in the closed-type mixer 100, and the rotation speed of the mixing rotor pair. In FIG. 3, the axis of ordinate represents the output in kW, and the axis of abscissa represents the number of rotations per minute (rpm).

As shown in FIG. 3, the mixing rotors 91, 92 are rotatable at an arbitrary rotation speed from 0 rpm to 20 rpm by solely driving the variable speed motor 20 in the output range A from 0 kW to 1,000 kW.

Also, the mixing rotors 91, 92 are rotatable at the rotation speed of 40 rpm by solely driving the fixed speed motor 10 with the output of 2,000 kW Further, the mixing rotors 91, 92 are rotatable at an arbitrary rotation speed from 40 rpm to 60 rpm by driving the variable speed motor 20 in addition to the fixed speed motor 10 the output range C from 2,000 kW to 3,000 kW

In the aforementioned operation method, the variable speed motor 20 is driven in such a rotating direction that makes the rotation speed of the mixing rotors 91, 92 higher than that in the case where solely the fixed speed motor 10 is driven. Rotating the variable speed motor 20 in a direction opposite to the aforementioned rotating direction makes the rotation speed of the mixing rotors 91, 92 lower than that in the case where solely the fixed speed motor 10 is driven. Applying this technique to the example of FIG. 3 enables to rotate the mixing rotors 91, 92 at an arbitrary rotation speed in the range from 20 rpm to 40 rpm, because the rotation speed of the mixing rotors 91, 92 can be varied within the range from 0 to -20 rpm by rotating the variable speed motor 20 in the aforementioned opposite direction, whereas the mixing rotors 91, 92 are rotated at the rotation speed of 40 rpm when solely the fixed speed motor 10 is driven.

In the closed-type mixer 100 in accordance with the first embodiment, the material to be mixed can be mixed in an optimal state by driving the fixed speed motor 10 to rotate the mixing rotor pair 91, 92 each provided with the feed flight and the return flight for mixing, controlling the detector 201 to detect the temperature of the material to be mixed, and causing the controller 200 to control the rotation speed of the variable speed motor 20 based on the obtained detection information. The detection information is not limited to the physical properties of the material to be mixed in the mixing machine 90 such as the temperature of the material to be mixed, but includes the temperature of the cooling water to be supplied to the mixer 100, the power of the motor, and their rates of change.

Specifically, the controller 200 predefines a target temperature that provides the material to be mixed with an intended quality, compares the target temperature with the temperature of the material to be mixed in the closed-type mixer 100, which is detected by the detector 201, and increases the rotation speed of the variable speed motor 20 to raise the temperature of the material to be mixed if the detected temperature of the material to be mixed is lower than the target temperature, and decreases the rotation speed of the variable speed motor 20 to lower the temperature of the material to be mixed if the detected temperature of the material to be mixed is higher than the target temperature.

Also, the rotational speed of the mixing rotor pair 91, 92 can be flexibly varied by driving the variable speed motor 20 in addition to the fixed speed motor 10 depending on the detection information relating to the material to be mixed and the like, or on a processing step to be carried out. By flexibly changing the rotational speed of the mixing rotor pair 91, 92, the material to be mixed can be mixed depending on the physical properties of the material to be mixed.

There are various processing steps, for instance, in mixing a material to be mixed. In view of this, the controller 200 conducts the following control depending on the processing step to be carried out, or on the state of the material to be mixed during mixing.

Specifically, in conducting a master batching step (e.g. carbon black supply step) or conducting a final mixing step (e.g. vulcanizer supply step), it is necessary to rotate the mixing rotor pair 91, 92 at a specified rotation speed. In the case where the mixing rotor pair 91, 92 of the mixing machine 90 is intended to be rotated at a specified rotation speed, the controller 200 is operative to rotate the fixed speed motor 10 at a rotation speed in a constant state i.e. at a constant rotation speed, and to rotate the variable speed motor 20 at an arbitrary constant rotation speed in a rotation speed range of the variable speed motor 20 from 0 to a predetermined upper limit.

Also, it is necessary to control the mixing rotor pair 91, 92, while varying the rotation speed thereof based on the detected temperature of the material to be mixed, or based on a temperature variation to rotate the mixing rotor pair 91, 92 at a rotation speed associated with the state of the material to be mixed, for instance, to control the mixing rotor pair 91, 92 based on the detected temperature of the material to be mixed, or to prevent overload of driving of the mixing rotor pair 91, 92, for instance, to control the mixing rotor pair 91, 92 based on the detected temperature of the material to be mixed. In this case, the controller 200 controls the fixed speed motor 10 to rotate at a constant rotation speed, and controls the variable speed motor 20 to variably rotate at an intended rotation speed in the rotation speed range from 0 to the predetermined upper limit.

There are cases that it is required to rotate the mixing rotor pair 91, 92 with a low load, for instance, in discharging the material to be mixed out of the closed-type mixer, or in starting up another mixer. In such a case, the controller 200 controllably rotates the mixing rotor pair 91, 92 by suspending the rotation of the fixed speed motor 10, and by solely driving the variable speed motor 20 at an arbitrary rotation speed within the rotation speed range from 0 to the predetermined upper limit.

Specifically, the rotation speed of the mixing rotor pair 91, 92 can be changed depending on the processing step to be carried out by merely changing the rotation speed of the variable speed motor 20, as shown in FIG. 3. This arrangement enables to reduce a load to the fixed speed motor 10 and to the variable speed motor 20, and enables to rotate the mixing rotor pair 91, 92 at an optimal rotation speed depending on the driving states of the fixed speed motor 10 and the variable speed motor 20. Thereby, lowering of the driving efficiency of the motors 10 and 20 can be prevented, and long-term use of the motors 10 and 20 can be secured.

Also, since each of the mixing rotor pair 91, 92 has the feed flight and the return flight for mixing, a strong shearing work can be done on the material to be mixed with less energy consumption, and various kinds of polymers, fillers, additives, and the like can be uniformly mixed, melted, and dispersed.

Further, since the fixed speed driven shaft S11 and the variable speed driven shaft S21 are arranged vertically away from each other, as compared with an arrangement in which the fixed speed driven shaft S11 and the variable speed driven shaft S21 are arranged parallel to each other on the same horizontal plane, the installation area (foot pattern) of the closed-type mixer 100 can be reduced. Also, as compared with an arrangement in which the fixed speed driven shaft S11 and the variable speed driven shaft S21 each extend vertically, this arrangement enables to reduce the height of the closed-type mixer 100.

### (Second Embodiment)

Now, a closed-type mixer 100a in accordance with a second embodiment is described referring to a drawing. The closed-type mixer 100a in accordance with the second embodiment is different from the closed-type mixer 100 in accordance with the first embodiment in the following points.

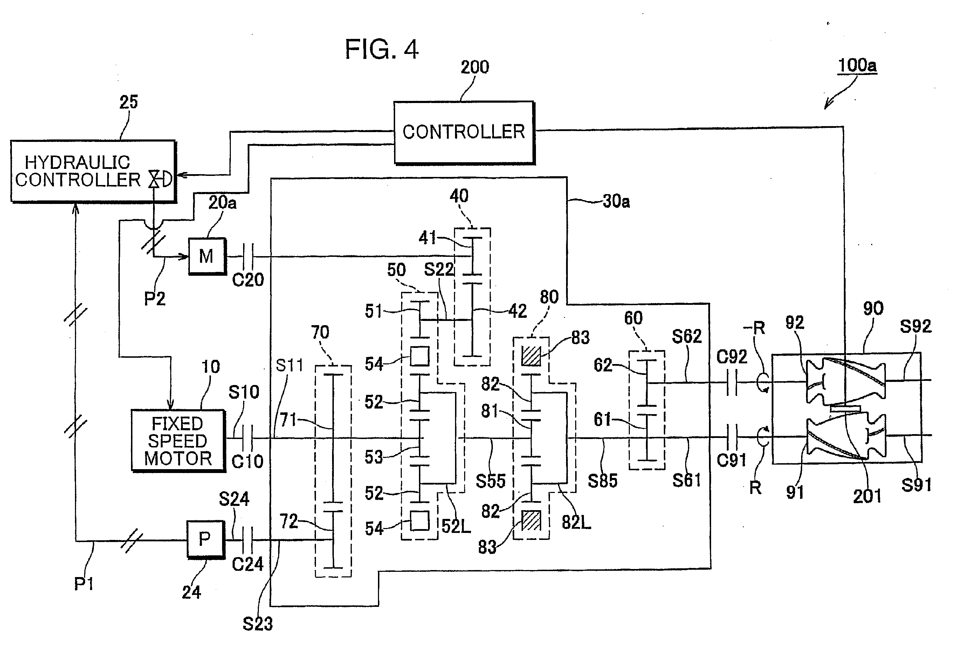

FIG. 4 is a schematic diagram showing an example of the closed-type mixer 100a in accordance with the second embodiment.

As shown in FIG. 4, the closed-type mixer 100a has a differential planetary system 30a in place of the differential planetary system 30 of the closed-type mixer 100. The differential planetary system 30a includes a pump power distribution mechanism 70 and a planetary gear mechanism 80 in addition to components corresponding to the components of the differential planetary system 30.

Also, the closed-type mixer 100a has a hydraulic motor 20a in place of the variable speed motor 20, and also has a hydraulic controller 25, a pump 24, and pipe arrangements P1 and P2. A discussion as to how an operation command is sent from a controller 200 to the hydraulic controller 25 is made later.

An operation of the closed-type mixer 100a is described first.

The controller 200 issues a command to a fixed speed motor 10 to drive the fixed speed motor 10. In the second embodiment, the controller 200 does not issue a command to the hydraulic motor 20a to drive the hydraulic motor 20a. If the fixed speed motor 10 receives the drive command from the controller 200, a torque of an output shaft S10 of the fixed speed motor 10 is transmitted to a fixed speed driven shaft S11 via a connecting coupler C10 to rotate a connecting gear 71 of the pump power distribution mechanism 70. In association with the rotation of the connecting gear 71, a connecting gear 72 is rotated to transmit the driving force of the fixed speed motor 10 to the pump 24 by way of a power transmission shaft 23, a connecting coupler C24, and a pump drive shaft S24. The pump 24 is driven by the driving force of the pump drive shaft S24. As a result of these operations, a hydraulic pressure of the hydraulic controller 25 is increased via the pipe arrangement P1.

Next, the controller 200 judges whether a drive command is to be issued to the hydraulic controller 25 based on detection information sent from a detector 201. The detection information is not limited to the physical properties of a material to be mixed in a mixing machine 90 such as the temperature of the material to be mixed, but includes the temperature of the cooling water to be supplied to the mixer, the power of the motor, and their rates of change.

If the hydraulic controller 25 receives the drive command from the controller 200 based on the detection information, the hydraulic controller 25 opens a flow rate regulating valve provided in the hydraulic controller 25 to feed a specified amount of hydraulic oil to the hydraulic motor 20a via the pipe arrangement P2. The hydraulic motor 20a is rotated at a specified rotation speed in response to receiving the specified amount of hydraulic oil.

A planetary gear 52 is rotated depending on a rotation speed difference between a sun gear 53 which is driven by the fixed speed motor 10, and an internal gear 54 which is driven by the hydraulic motor 20a to transmit a predetermined torque from a planetary gear driver 52L to a drive shaft S55. Then, the predetermined torque is transmitted to the planetary gear mechanism 80, and further to a planetary gear driver 82L via a planetary gear 82 provided around a sun gear 81. The torque transmitted to the planetary gear driver 82L is transmitted to a drive shaft S85 connected to the planetary gear driver 82L, and is transmitted to distribution drive shafts S61, S62 via connecting gears 61, 62 of the distribution mechanism 60. The drive shaft S85 and the distribution drive shaft S61 may be an integral shaft.

In the closed-type mixer 100a in accordance with the second embodiment, the rotation speed of the hydraulic motor 20a can be flexibly adjusted by adjusting the opening of the flow rate regulating valve of the hydraulic controller 25. Also, the hydraulic pressure can be increased by using the power of the fixed speed motor 10, which contributes to simplification of the arrangement of the closed-type mixer 100a, and reduction of the installation space for the closed-type mixer 100a without the need of an additional hydraulic pump driver.

In this embodiment, the hydraulic motor 20a is used. Alternatively, a variable-capacity hydraulic motor may be used. In this embodiment, the pump 24 is used. Alternatively, any pump other than the pump 24 such as a variable-capacity hydraulic pump may be used.

As an altered arrangement, a one-way clutch system may be provided on a hydraulic circuit by arranging a check valve at a proper position on the pipe arrangement P2 or a like device, or by providing a hydraulic motor capable of rotating in one direction to prevent backflow of the hydraulic oil.

### (Third Embodiment)

Next, a closed-type mixer 100b in accordance with a third embodiment is described referring to a drawing. The closed-type mixer 100b in accordance with the third embodiment is different from the closed-type mixer 100 in accordance with the first embodiment in the following points.

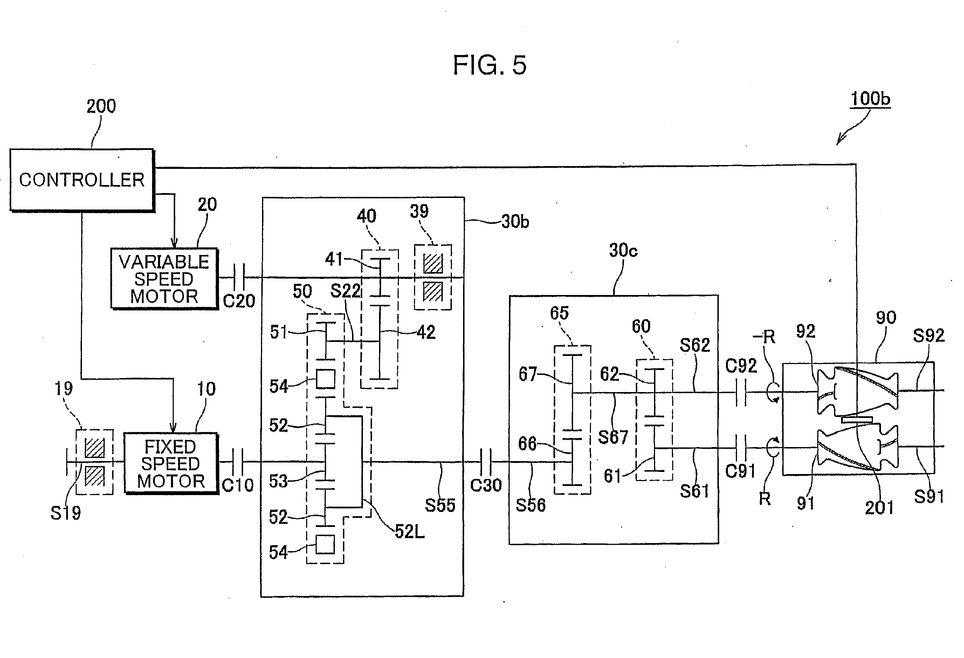

FIG. 5 is a schematic diagram showing an example of the closed-type mixer 100b in accordance with the third embodiment. As shown in FIG. 5, the closed-type mixer 100b has individual components i.e. a differential planetary system 30b, a connecting coupler C30, a power transmission shaft S56, and a distributive speed reduction system 30c, in place of the differential planetary system 30.

The differential planetary system 30b of the closed-type mixer 100b in accordance with the third embodiment has a variable speed power transmission mechanism 40 and a differential planetary gear mechanism 50 corresponding to the variable speed power transmission mechanism 40 and the differential planetary gear mechanism 50 of the differential planetary system 30 of the closed-type mixer 100 in accordance with the first embodiment.

Also, a torque of a fixed speed motor 10 and a variable sped motor 20 is transmitted from a drive shaft S55 to the distributive speed reduction system 30c via the connecting coupler C30 and the power transmission shaft S56.

The distributive speed reduction system 30c includes a reduction mechanism 65 and a distribution mechanism 60. The torque from the power transmission shaft S56 is transmitted to a reduction gear 66 of the reduction mechanism 65, and then is transmitted to a reduction gear 67. The torque transmitted to the reduction gear 67 is supplied to a connecting gear 62 via a power transmission shaft S67, and the torque is also distributed to a connecting gear 61 so that the torque is transmitted to distribution drive shafts S61, S62. The power transmission shaft S67 and the distribution drive shaft S62 may be an integral shaft.

As compared with the closed-type mixer 100 in accordance with the first embodiment, the closed-type mixer 100b in accordance with the third embodiment is advantageous in production cost reduction of the closed-type mixer 100b and in feasibility of maintenance service, because the differential planetary system 30b and the distributive speed reduction system 30c are individually provided, unlike the second embodiment where the one-piece differential planetary system 30a, which is likely to make the arrangement of the mixer complicated, is provided.

### (Fourth Embodiment)

Next, a closed-type mixer 100c in accordance with a fourth embodiment is described referring to a drawing. The closed-type mixer 100c in accordance with the fourth embodiment is different from the closed-type mixer 100b in accordance with the third embodiment in the following points.

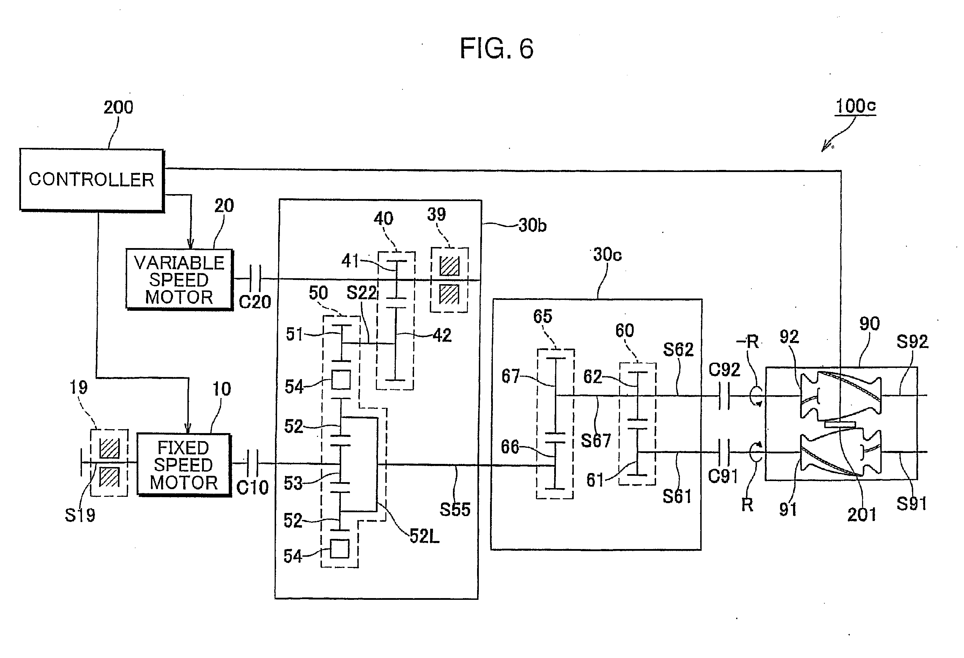

FIG. 6 is a schematic diagram showing an example of the closed-type mixer 100c in accordance with the fourth embodiment.

As shown in FIG. 6, in the closed-type mixer 100c, a drive shaft S55 of a differential planetary system 30b is directly connected to a power transmission shaft S56 of a distributive speed reduction system 30c, whereas, in the closed-type mixer 100b in accordance with the third embodiment, the connecting coupler C30 is used to connect the drive shaft S55 and the power transmission shaft S56.

As shown in FIG. 6, a torque from the differential planetary system 30b is directly transmitted to the distributive speed reduction system 30c without the use of a connecting coupler C30. This arrangement enables to reduce the installation area of the closed-type mixer 100c, as compared with the closed-type mixer 100b shown in FIG. 5, and contributes to production cost reduction by the cost relating to the connecting coupler C30.

The distributive speed reduction system 30c may be other than the aforementioned arrangement, in which a rotation speed of the drive shaft S55 is geared or reduced. For instance, a speed reduction mechanism 65 may include a constant speed power transmission means, which has a chain and a sprocket, or gears, or the like. Further alternatively, the speed reduction mechanism 65 may be constructed in such a manner that the output from the differential planetary system 30b is directly transmitted to a distribution mechanism 60. Further alternatively, the speed reduction mechanism 65 may have an arrangement, in which the rotation speed of the drive shaft S55 is geared or reduced by a chain or gears.

In any of the above arrangements, the components from the differential planetary system 30b to a mixing machine 90 can be arranged at proper positions with latitude.

### (Fifth Embodiment)

Next, a closed-type mixer 100d in accordance with a fifth embodiment is described referring to a drawing. The closed-type mixer 100d in accordance with the fifth embodiment is different from the closed-type mixer 100c in accordance with the fourth embodiment in the following points.

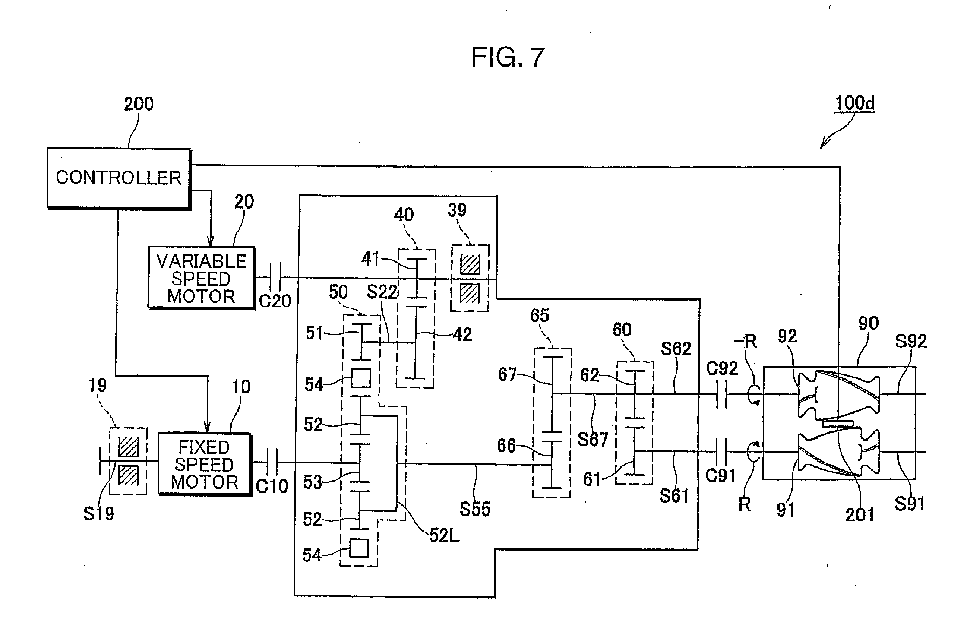

FIG. 7 is a schematic diagram showing an example of the closed-type mixer 100d in accordance with the fifth embodiment.

As shown in FIG. 7, in the closed-type mixer 100d, the differential planetary system 30b and the distributive speed reduction system 30c of the closed-type mixer 100c in accordance with the fourth embodiment are assembled into a one-piece unit.

In the closed-type mixer 100d, a torque from the differential planetary system 30b is directly transmitted to the distributive speed reduction system 30c without the use of a connecting coupler C30. This arrangement enables to reduce the installation space for the closed-type mixer 100d, as compared with the closed-type mixer 100b in FIG. 5, and contributes to production cost reduction by the cost relating to the connecting coupler C30.

In the first through the fifth embodiments, the mixing machine 90 corresponds to a mixing chamber, the mixing rotor pair 91, 92 corresponds to a mixing rotor pair, the closed-type mixer 100, 100a, 100b, 100c, 100d corresponds to a mixer, the fixed speed motor 10 corresponds to a fixed speed motor, the variable speed motor 20 corresponds to a variable speed motor, the differential planetary gear mechanism 50 corresponds to a planetary gear transmission, the sun gear 53 corresponds to a sun gear, the internal gear 54 corresponds to an internal gear, the planetary gear 52 corresponds to a planetary gear, the planetary gear driver 52L corresponds to a gear retainer, the distribution mechanism 60 corresponds to a pair of connecting gears, the distribution drive shaft S62 and the distribution drive shaft S61 correspond to a pair of power output shafts, the variable speed driven shaft S21 corresponds to a variable speed output shaft, the fixed speed driven shaft S11 corresponds to a fixed speed output shaft, the power transmission shaft S22 corresponds to a gear shaft, the hydraulic motor 20a corresponds to a hydraulic motor and a variable-capacity hydraulic motor, the pump 24 corresponds to a hydraulic pump, the hydraulic controller 25 corresponds to a flow rate regulating valve, the detector 201 corresponds to a detector, and the controller 200 corresponds to a controller.

The invention has been described by the first through the fifth preferred embodiments, but is not limited thereto. It should be construed that various modifications are applicable as far as such modifications do not depart from the scope of the present invention defined herein. Also, operations and effects concerning the arrangement of the invention have been described in the foregoing embodiments. However, the aforementioned operations and effects are merely an example, and do not delimit the invention.

As described above, the first aspect of the invention is directed to a mixer for mixing a material to be mixed in a mixing chamber. The mixer is provided with a pair of mixing rotors each being rotatably supported on opposite ends of the mixing rotor. The mixing rotors are rotatable in different directions from each other. The mixer comprises: a fixed speed motor which is rotated at a constant rotation speed; a variable speed motor which is variably rotated at an arbitrary rotation speed; and a planetary gear transmission for transmitting a power of the fixed speed motor and a power of the variable speed motor to the mixing rotor pair. The planetary gear transmission includes: a sun gear for receiving the power of the fixed speed motor; an internal gear for receiving the power of the variable speed motor; a planetary gear which is meshed with the sun gear and the internal gear; a gear retainer for transmitting the power from the planetary gear to the mixing rotor pair; a pair of connecting gears for splitting the power from the gear retainer into two, the connecting gears being rotated in different directions from each other in engagement with each other; and a pair of power output shafts which are provided in association with the connecting gears, respectively, and are connected to the mixing rotor pair for outputting the power split by the connecting gears to the mixing rotor pair.

In the mixer recited in the first aspect, the fixed speed motor is rotated at the constant rotation speed, and the variable speed motor is variably rotated at the arbitrary rotation speed. The rotation speed based on the rotation speed difference between the fixed speed motor and the variable speed motor is supplied to the mixing rotor pair by the operations of the sun gear, the planetary gear, the internal gear, and the gear retainer of the planetary gear transmission.

In the above arrangement, the rotational speed of the mixing rotor pair can be flexibly varied by driving the variable speed motor in addition to the fixed speed motor depending on a step of processing the material to be mixed. This arrangement facilitates mixing of the material to be mixed.

Specifically, in the case where the rotation speed of the mixing rotor pair is intended to be changed depending on a processing step by using the fixed speed motor and the variable speed motor, the rotation speed of the mixing rotor pair can be desirably changed by simply changing the rotation speed of the variable speed motor. This enables to reduce a load to the fixed speed motor and to the variable speed motor, and to rotate the mixing rotor pair at an optimal rotation speed depending on the driving states of the respective motors. This arrangement enables to maintain the driving efficiency of the respective motors high, and to secure long-term use of the respective motors.

Preferably, the mixing rotors each may include a rotating shaft with the opposite ends of the rotating shaft being rotatably supported, and the rotating shafts of the mixing rotors may extend parallel to each other. Each of the mixing rotors may include a feed flight which is twisted in such a direction as to feed the material to be mixed from one end of the rotating shaft toward the other end thereof, and a return flight which is twisted in such a direction as to feed the material to be mixed from the other end of the rotating shaft toward the one end thereof.

In the above arrangement, the mixing rotor pair each has the feed flight and the return flight for mixing, and the feed flight and the return flight of each of the mixing rotor pair are twisted in the directions opposite to each other. This arrangement allows a strong shearing work to be done on the material to be mixed with less energy consumption, and enables to uniformly mix, melt, and disperse various kinds of polymers, fillers, additives, and the like.

Preferably, the fixed speed motor may be connected to a fixed speed output shaft for transmitting the power of the fixed speed motor to the mixing rotor pair, the variable speed motor may be connected to a variable speed output shaft for transmitting the power of the variable speed motor to the mixing rotor pair, and the fixed speed motor output shaft and the variable speed motor output shaft may be arranged vertically away from each other.

In the above arrangement, since the fixed speed output shaft and the variable speed output shaft are arranged vertically away from each other, as compared with an arrangement in which the fixed speed output shaft and the variable speed output shaft are arranged parallel to each other on the same horizontal plane, the installation area (foot pattern) of the mixer can be reduced. Also, this arrangement enables to reduce the height of the mixer, as compared with an arrangement in which the fixed speed output shaft and the variable speed output shaft each extend vertically.

Preferably, the fixed speed motor may be connected to a fixed speed output shaft for transmitting the power of the fixed speed motor to the mixing rotor pair, the variable speed motor may be connected to a gear shaft by way of a variable speed output shaft for transmitting the power of the variable speed motor to the mixing rotor pair, and the fixed speed output shaft and the gear shaft may be arranged vertically away from each other.

In the above arrangement, since the fixed speed output shaft, and the gear shaft connected to the variable speed output shaft are arranged vertically away from each other, as compared with an arrangement in which the fixed speed output shaft and the gear shaft are arranged parallel to each other on the same horizontal plane, the installation area (foot pattern) of the mixer can be reduced. Also, this arrangement enables to reduce the height of the mixer, as compared with an arrangement in which the fixed speed output shaft and the gear shaft each extend vertically.

Preferably, the variable speed motor may include a hydraulic motor which is driven by a hydraulic oil, a hydraulic pump for feeding the hydraulic oil to the hydraulic motor by the power of the fixed speed motor, and a flow rate regulating valve which is provided between the hydraulic motor and the hydraulic pump to regulate a flow rate of the hydraulic oil fed from the hydraulic pump.

In the above arrangement, the rotation speed of the variable speed motor can be flexibly adjusted by adjusting the opening of the flow rate regulating valve. Also, the hydraulic pressure can be increased by using the power of the fixed speed motor. This arrangement enables to reduce the installation space for the mixer without the need of an additional hydraulic pump driver.

Preferably, the variable speed motor may include a variable-capacity hydraulic motor which is variably driven in accordance with a feed amount of a hydraulic oil, and a hydraulic pump for feeding the hydraulic oil to the variable-capacity hydraulic motor by the power of the fixed speed motor.

In the above arrangement, the rotation speed of the variable-capacity hydraulic motor can be changed by changing the inflow rate of the hydraulic oil to be fed from the hydraulic pump to the motor.

Preferably, the mixer may further comprise: a detector for detecting a temperature of the material to be mixed; and a controller for comparing the temperature of the material to be mixed which is detected by the detector with a predetermined target temperature to increase the rotation speed of the variable speed motor if the detected temperature is lower than the predetermined target temperature, and to decrease the rotation speed of the variable speed motor if the detected temperature is higher than the predetermined target temperature.

In the above arrangement, since the detector detects the temperature of the material to be mixed, and the controller controls the rotation speed of the variable speed motor, the material to be mixed can be mixed in an optimal state. Specifically, the target temperature of the material to be mixed during mixing is predefined so that the material to be mixed is provided with an intended quality The controller controls the respective components of the mixer so that the temperature detected by the detector reaches the predefined target temperature. For instance, if the temperature detected by the detector is lower than the predetermined target temperature, the controller controls the variable speed motor to increase the rotation speed of the motor so as to raise the temperature of the material to be mixed. On the other hand, if the temperature detected by the detector is higher than the target temperature, the controller controls the variable speed motor to decrease the rotation speed of the motor so as to lower the temperature of the material to be mixed. This provides the material to be mixed with the intended quality.

Preferably, the controller may control turning on/off of the driving of the fixed speed motor.

In the above arrangement, since on/off of the driving of the fixed speed motor can be controlled, the rotation of the mixing rotor pair can be easily switched over between low and high, this arrangement can handle processing operations of various kinds of materials to be mixed.

A second aspect of the invention is directed to a method for controllably mixing a material to be mixed in a mixing chamber by rotating a pair of mixing rotors by combined use of a fixed speed motor which is rotated at a constant rotation speed, and a variable speed motor which is variably rotated at an arbitrary rotation speed. Each of the mixing rotors is rotatably supported on opposite ends thereof, and the mixing rotors are rotatable in different directions from each other. The method comprises controlling the rotation speed of the mixing rotor pair by combined control of turning on/off of the driving of the fixed speed motor, and changing of the rotation speed of the variable speed motor.

In the mixing control method recited in the second aspect, turning on/off of the driving of the fixed speed motor can be desirably switched over, and the rotation speed of the variable speed motor can be desirably changed depending on the physical properties of the material to be mixed and/or a variation of the physical properties.

In the above arrangement, a mixing step can be defined in advance depending on the physical properties of the material to be mixed so that the material to be mixed can be properly mixed depending on a variation of the physical properties of the material to be mixed.

Also, the rotational speed of the mixing rotor pair can be flexibly controlled by controlling the variable speed motor in addition to the fixed speed motor depending on a processing step of the material to be mixed. Specifically, in the case where the rotation speed of the mixing rotor pair is intended to be changed depending on the processing step by using the fixed speed motor and the variable speed motor, the rotation speed of the mixing rotor pair can be changed by simply controlling the rotation speed of the variable speed motor. This enables to reduce a load to the fixed speed motor and to the variable speed motor, and to rotate the mixing rotor pair at an optimal rotation speed depending on the driving states of the respective motors, which prevents the driving efficiency of the respective motors from unduly lowering. As a result, long-term use of the fixed speed motor and the variable speed motor is secured.

Specifically, the above arrangement enables to realize: a mixing control method comprising rotating the variable speed motor at a constant rotation speed, while rotating the fixed speed motor at a constant rotation speed; a mixing control method comprising variably rotating the variable speed motor at an arbitrary rotation speed while rotating the fixed speed motor at a constant rotation speed; a mixing control method comprising rotating the variable speed motor at an arbitrary rotation speed while suspending rotation of the fixed speed motor, and the like.

## Claims

1. A mixer for mixing a material to be mixed in a mixing chamber, the mixer being provided with a pair of mixing rotors each being rotatably supported on opposite ends of the mixing rotor, the mixing rotors being rotatable in different directions from each other, the mixer comprising:
a fixed speed motor which is rotated at a constant rotation speed;
a variable speed motor which is variably rotated at an arbitrary rotation speed; and
a planetary gear transmission for transmitting a power of the fixed speed motor and a power of the variable speed motor to the mixing rotor pair,
the planetary gear transmission including
a sun gear for receiving the power of the fixed speed motor;
an internal gear for receiving the power of the variable speed motor;
a planetary gear which is in mesh with the sun gear and the internal gear;
a gear retainer for transmitting the power from the planetary gear to the mixing rotor pair;
a pair of connecting gears for splitting the power from the gear retainer into two, the connecting gears being rotated in different directions from each other in engagement with each other; and
a pair of power output shafts which are provided in association with the connecting gears, respectively, and are connected to the mixing rotor pair for outputting the power split by the connecting gears to the mixing rotor pair.

2. The mixer according to claim 1, wherein
the mixing rotors each includes a rotating shaft with the opposite ends of the rotating shaft being rotatably supported, the rotating shafts of the mixing rotors extending parallel to each other, and
the each of the mixing rotors includes a feed flight which is twisted in such a direction as to feed the material to be mixed from one end of the rotating shaft toward the other end thereof, and a return flight which is twisted in such a direction as to feed the material to be mixed from the other end of the rotating shaft toward the one end thereof.

3. The mixer according to claim 1, wherein
the fixed speed motor is connected to a fixed speed output shaft for transmitting the power of the fixed speed motor to the mixing rotor pair;
the variable speed motor is connected to a variable speed output shaft for transmitting the power of the variable speed motor to the mixing rotor pair; and
the fixed speed motor output shaft and the variable speed motor output shaft are arranged vertically away from each other.

4. The mixer according to claim 1, wherein
the fixed speed motor is connected to a fixed speed output shaft for transmitting the power of the fixed speed motor to the mixing rotor pair;
the variable speed motor is connected to a gear shaft by way of a variable speed output shaft for transmitting the power of the variable speed motor to the mixing rotor pair; and
the fixed speed output shaft and the gear shaft are arranged vertically away from each other.

5. The mixer according to claim 1, wherein
the variable speed motor includes:
a hydraulic motor which is driven by a hydraulic oil;
a hydraulic pump for feeding the hydraulic oil to the hydraulic motor by the power of the fixed speed motor; and
a flow rate regulating valve which is provided between the hydraulic motor and the hydraulic pump to regulate a flow rate of the hydraulic oil fed from the hydraulic pump.

6. The mixer according to claim 1, wherein
the variable speed motor includes:
a variable-capacity hydraulic motor which is variably driven in accordance with a feed amount of a hydraulic oil; and
a hydraulic pump for feeding the hydraulic oil to the variable-capacity hydraulic motor by the power of the fixed speed motor.

7. The mixer according to claim 1, further comprising:
a detector for detecting a temperature of the material to be mixed; and
a controller for comparing the temperature of the material to be mixed which is detected by the detector with a predetermined target temperature to increase the rotation speed of the variable speed motor if the detected temperature is lower than the predetermined target temperature, and to decrease the rotation speed of the variable speed motor if the detected temperature is higher than the predetermined target temperature.

8. The mixer according to claim 7, wherein the controller controls turning on/off of the driving of the fixed speed motor.

9. A method for controllably mixing a material to be mixed in a mixing chamber by rotating a pair of mixing rotors by combined use of a fixed speed motor which is rotated at a constant rotation speed, and a variable speed motor which is variably rotated at an arbitrary rotation speed, the each of the mixing rotors being rotatably supported on opposite ends thereof, the mixing rotors being rotatable in different directions from each other, the method comprising:
controlling the rotation speed of the mixing rotor pair by combined control of turning on/off of the driving of the fixed speed motor, and changing of the rotation speed of the variable speed motor.
